(19)

Europäisches
Patentamt
European
Patent Office
Office européen
des brevets

(11) **EP 3 410 611 A1**

(12) **EUROPEAN PATENT APPLICATION**

(43) Date of publication:
**05.12.2018 Bulletin 2018/49**

(51) Int Cl.:
*H04B 7/0413* (2017.01)   *H01Q 23/00* (2006.01)
*H01Q 3/00* (2006.01)

(21) Application number: **18174430.1**

(22) Date of filing: **25.05.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.06.2017  IL 25265317**

(71) Applicant: **Elta Systems Ltd.
Ashdod 7710201 (IL)**

(72) Inventors:
• **TENEH, Nimrod
4633313 Herzliya (IL)**
• **LUKOVSKY, Gregory
5442105 Givat-Shmuel (IL)**
• **ROSENKRANTZ, Mark
7770307 Ashdod (IL)**
• **BEN-HARUSH, Moti
7140904 Lod (IL)**

(74) Representative: **Sadler, Peter Frederick
Reddie & Grose LLP
The White Chapel Building
10 Whitechapel High Street
London E1 8QS (GB)**

(54) **METHODS AND SYSTEMS FOR CONTROLLING AN ANTENNA PATTERN**

(57)   A method of controlling an electromagnetic antenna field generated by an array of antenna units comprises controlling at least the amplitude of electrical input provided to each of the antenna units, and generating at least one electromagnetic antenna field by the antenna units, wherein the trajectory of the electromagnetic antenna field is curved in the near field region, as a consequence of at least said control.

A method comprises providing data indicative of at least one constraint on a curvature of a trajectory of propagation of an electromagnetic antenna field to be generated by the array of antenna unit in the near field region, building, using a processing unit, at least one set of at least one function usable for defining electrical input to be provided to said antenna units for complying with said constraint, assigning to each of the antenna units a respective weighting parameter and generating an electromagnetic antenna field.

Fig. 1

## Description

## TECHNICAL FIELD AND BACKGROUND

The presently disclosed subject matter is generally in the field of antenna operation techniques, and relates to a solution for controlling an antenna pattern, in particular the antenna pattern formed by an array of antenna units.

Beams produced by antennas, such as radio frequency beams, are widely used in the art, in the field of telecommunications and various other techniques. Control of the antenna pattern is needed in many applications, in order to provide desired gain, directionality, etc. of the beam being produced by the antenna.

## GENERAL DESCRIPTION

There is need in the art for a novel approach for controlling antenna patterns, for example in order to provide desired trajectory of the antenna beam to go around an obstacle located in the vicinity of the antenna device.

The above needs that the antenna beam trajectory in the near field distances from the antenna be non-linear and have a required curvature, ensuring that the beam trajectory does not intersect with the obstacle. As the antenna device in many cases is a multi-element device, i.e. an antenna array, this can be used for implementing the technique of the invention. It should however be understood that the principles of the invention do not require the use of phased array antenna, and can be performed by a plurality of antenna units not necessarily located in the same platform. Further, for the purposes of the invention, each antenna unit may or may not be in itself a multi-element antenna, either phased array or not.

According to one aspect of the presently disclosed subject matter there is provided a method for use in signal transmission, the method comprising providing data indicative of at least one constraint on a predetermined trajectory of propagation of at least one electromagnetic antenna field to be generated by an array of antenna units, said data indicative of the at least one constraint comprising data on at least a curvature of said trajectory in the near field region of the array of antenna units, building, using a processing unit, at least one set of at least one function usable for defining electrical input to be provided to said antenna units for complying with said constraint, and based on data indicative of an arrangement of the antenna units in the array and said at least one set of at least one function, assigning to each of the antenna units a respective weighting parameter for at least an amplitude of electrical input to be provided to said antenna unit, such that a resulting electromagnetic antenna field of the array of antenna units complies with said constraint on said predetermined trajectory of propagation according to a matching criterion.

In addition to the above features, the method according to this aspect of the presently disclosed subject matter can optionally comprise one or more of features (i) to (vii) below, in any technically possible combination or permutation:

i. the method comprises assigning to each of the antenna units a respective weighting parameter for at least an amplitude and a phase of electrical input to be provided to said antenna unit;

ii. wherein said at least one constraint comprises at least one constraint on at least a property of the electromagnetic antenna field in the far field region;

iii. wherein the set of at least one function includes one of: an Airy function, a Half-Bessel function, a combination of a plurality of Airy functions or Half-Bessel functions, and a combination of functions wherein said combination includes at least one of an Airy function and a Half-Bessel function;

iv. the method comprises simulating the trajectory of the resulting electromagnetic antenna field of the array of antenna units obtained based on an electrical input to be provided to each of the antenna units according to said respective weighting parameters, and comparing the simulated trajectory with said at least one constraint;

v. the method comprises performing repetitively (a) building, using a processing unit, at least one set of at least one function usable for defining an electrical input to be provided to said antenna units, and (b) simulating the trajectory of the resulting electromagnetic antenna field of the array of antenna units obtained based on an electrical input to be provided to each of the antenna units according to weighting parameters determined based on data indicative of an arrangement of the antenna units in the array and said at least one set of at least one function, wherein (a) and (b) are repeated until said at least one constraint is fulfilled by the simulated resulting electromagnetic antenna field according to a matching criterion.

vi. wherein the at least one constraint comprises at least one of a constraint on the amplitude of the electromagnetic antenna field in the near field region, a constraint on the main gain of the electromagnetic antenna field in the far field region, a constraint on a beam width of the electromagnetic antenna field in the far field region, a constraint on an amplitude of at least one side lobe of the electromagnetic antenna field in the far field region, and a constraint on a peak value of the electromagnetic antenna field in the far field region;

vii. the constraint comprises a constraint on a predetermined trajectory of propagation of at least one electromagnetic antenna field to be generated by an array of antenna units in a space comprising at least one obstacle, and the method comprises building, using a processing unit, at least one set of at least one function usable for defining electrical input to be provided to said antenna units for complying with said constraint in said space but without said obstacle, simulating, in said space comprising said obstacle, the trajectory of the resulting electromagnetic antenna field of the array of antenna units obtained based on an electrical input to be provided to each of the antenna units according to respective weighting parameters determined based on data indicative of an arrangement of the antenna units in the array and said at least one set of at least one function, and tuning the set of at least one function until the constraint is fulfilled by the simulated resulting electromagnetic antenna field in said space comprising said obstacle, according to a matching criterion.

According to another aspect of the presently disclosed subject matter there is provided a non-transitory storage device readable by a processing unit, tangibly embodying a program of instructions executable by a processing unit to perform the method described above.

In addition to the above features, the device according to this aspect of the presently disclosed subject matter can optionally comprise one or more of features (i) to (vii) above, in any technically possible combination or permutation:

According to another aspect of the presently disclosed subject matter there is provided a method of controlling an electromagnetic antenna field generated by an array of antenna units, the method comprising controlling at least the amplitude of electrical input provided to each of the antenna units, and generating at least one electromagnetic antenna field by the antenna units, wherein the trajectory of the electromagnetic antenna field is curved in the near field region, as a consequence of at least said control.

In addition to the above features, the electrical input provided to the antenna elements can be determined according to the method described above, wherein this method can optionally further comprise one or more of features (i) to (vii) above, in any technically possible combination or permutation:

In addition to the above features, the method according to this aspect of the presently disclosed subject matter can optionally comprise one or more of features (viii) to (xvii) below, in any technically possible combination or permutation:

viii. the method comprises controlling at least the amplitude of electrical input provided to each of the antenna units according to respective weighting parameters associated to each of the antenna units;
ix. the respective weighting parameters associated to each of the antenna units are calculated based on at least one set of at least one function and based on data indicative of an arrangement of the antenna units in the array;
x. an obstacle is present in the near field region of the array of antenna units, and the method comprises generating at least one electromagnetic antenna field by the array of antenna units, wherein the trajectory of the electromagnetic antenna field is curved in the near field region so as to make the electromagnetic antenna field avoid said object;
xi. the method comprises controlling the amplitude and the phase of the voltage or of the current provided to each of the antenna units;
xii. the method comprises controlling the phase of the electrical input so as to make it equal to zero;
xiii. the method comprises controlling at least one property of the electromagnetic antenna field in the far field region, said at least one property including at least one of a constraint on the main gain of the electromagnetic antenna field in the far field region, a constraint on a beam width of the electromagnetic antenna field in the far field region, a constraint on an amplitude of at least one side lobe of the electromagnetic antenna field in the far field region, and a constraint on a peak value of the electromagnetic antenna field in the far field region.
xiv. the method comprises generating at least one beam in the near field region;
xv. the method comprises generating a beam in the near field region and controlling an amplitude of the electromagnetic antenna field in the vicinity of the beam in the near field region;
xvi. the method comprises at least one of:

the amplitude of the radiation in the vicinity of the beam is controlled to be less than a desired threshold, in order to avoid interferences with an element present in the near field region of the array of antenna units; and

the amplitude of the radiation in the vicinity of the beam is controlled to be above a desired threshold, in order to create interferences with an element present in the near field region of the array of antenna units;

xvii. the method comprises providing data indicative of at least one constraint on a predetermined trajectory of propagation of at least one electromagnetic antenna field to be generated by the array of antenna units, said data indicative of the at least one constraint comprising data on at least a curvature of said trajectory in the near field region of the array of antenna units, building, using a processing unit, at least one set of at least one function usable for defining electrical input to be provided to said antenna units for complying with said constraint, based on data indicative of an arrangement of the antenna units in the array and said at least one set of at least one function, assigning to each of the antenna units a respective weighting parameter for at least an amplitude of electrical input to be provided to said antenna unit, and generating an electromagnetic antenna field by the array of antenna units such that the electromagnetic antenna field complies with said constraint according to a matching criterion.

According to another aspect of the presently disclosed subject matter there is provided a system, comprising an array of antenna units, and a controller configured to control at least the amplitude of electrical input provided to each of the antenna units, said control being performed so as to generate at least one electromagnetic antenna field by the antenna units, such that the trajectory of the electromagnetic antenna field is curved in the near field region, as a consequence of at least said control.

In addition to the above features, the system according to this aspect of the presently disclosed subject matter can optionally comprise one or more of features (xviii) to (xxvi) below, in any technically possible combination or permutation:

xviii. the controller is configured to control at least the amplitude of electrical input provided to each of the antenna units according to respective weighting parameters associated to each of the antenna units;
xix. the controller is configured to control the electrical input provided to the antenna units so as to produce at least one electromagnetic antenna field by the array of antenna units, wherein the trajectory of the electromagnetic antenna field is curved in the near field region so as to make the electromagnetic antenna field avoid an object present in the near field region of the antenna units;
xx. the controller is configured to control the amplitude and the phase of the voltage or of the current provided to each of the antenna units;
xxi. the controller is configured to control the phase of the electrical input so as to make it equal to zero;
xxii. the controller is configured to control at least one property of the electromagnetic antenna field in the far field region, said at least one property including at least one of a constraint on the main gain of the electromagnetic antenna field in the far field region, a constraint on a beam width of the electromagnetic antenna field in the far field region, a constraint on an amplitude of at least one side lobe of the electromagnetic antenna field in the far field region, and a constraint on a peak value of the electromagnetic antenna field in the far field region;
xxiii. the controller is configured to control the electrical input provided to each of the antenna units according to respective weighting parameters associated to each of the antenna units and calculated based on at least one set of at least one function;
xxiv. the controller is configured to control the electromagnetic antenna field so as to produce a beam in the near field region;
xxv. the controller is configured to control the electromagnetic antenna field so as to produce a beam in the near field region and to control an amplitude of the electromagnetic antenna field in the vicinity of the beam in the near field region;
xxvi. the system comprises at least one of:

- the controller is configured to control the amplitude of the electromagnetic antenna field in the vicinity of the beam so as to be less than a desired threshold, in order to avoid interferences with an element present in the near field region of the array of antenna units; and
- the controller is configured to control the amplitude of the electromagnetic antenna field in the vicinity of the beam so as to be above a desired threshold, in order to create interferences with an element present in the near field region of the array of antenna units.

According to some embodiments, the proposed solution can control the curvature of a beam produced by an antenna or an array of antenna units in the near field region.

In particular, according to some embodiments, the curvature of the beam can be electronically manipulated without changing the physical layout of the antenna units of the array.

According to some embodiments, the proposed solution can control the spatial distribution of the intensity of the electromagnetic radiation emitted by an antenna or an array of antenna units in the near field region.

According to some embodiments, the proposed solution can provide an electromagnetic radiation which complies with constraints related to the trajectory of a beam produced by an antenna or an array of antenna units in the near field region and/or related to the spatial distribution of the intensity of the electromagnetic radiation emitted by the antenna of the array of antenna units in the near field region.

According to some embodiments, the proposed solution can also control properties of the beam produced by an antenna or an array of antenna units in the far field region.

According to some embodiments, the proposed solution can control a beam in the near field region of an antenna or an array of antenna units for various applications, such as avoiding obstacles, reducing or increasing interferences, improving communication between an emitting antenna and a receiving antenna, etc.

## BRIEF DESCRIPTION OF THE DRAWINGS

In order to understand the invention and to see how it can be carried out in practice, embodiments will be described, by way of non-limiting examples, with reference to the accompanying drawings, in which:

- **Fig. 1** illustrates an embodiment of an antenna which produces a near field beam with a bent trajectory in the near field region;
- **Fig. 2** illustrates an embodiment of an emitting antenna which communicates with a receiving antenna, wherein the emitting antenna produces a beam with a curved trajectory in order to avoid an obstacle in the near field region;

- **Fig. 3** illustrates an embodiment of a method for use in signal transmission, for controlling the electrical input provided to the antenna units of the antenna;
- **Fig. 4A** illustrates a non-limiting example of a near field beam with a curved trajectory, as emitted by an antenna ;
- **Fig. 4B** illustrates a non-limiting example of a distribution of the radiation intensity of the antenna of **Fig. 4A**, at a given distance from the antenna and along a given slice;
- **Fig. 5** illustrates an embodiment of a method of building a set of functions for controlling the electrical input provided to the antenna units of the phased array antenna, in order to comply with constraints on the beam;
- **Fig. 6A** illustrates a non-limitative example of a function obtained with the method of **Fig. 5**;
- **Fig. 6B** illustrates a non-limitative example of a method of calculating parameters of the function for controlling the electrical input provided to the antenna units of the antenna, in order to comply with constraints on the beam;
- **Fig. 7** illustrates an embodiment of a method of building a function for which constraints are provided on the curvature of the beam in the near field region, as well as on properties of the beam in the far field region;
- **Fig. 8** provides a non-limitative example of an antenna mounted on an airborne vehicle wherein the antenna pattern of the antenna is controlled to bypass the tail of the airborne vehicle;
- **Fig. 9A** and **Fig. 9B** illustrate simulation of the spatial distribution of the intensity of the radiation produced by the antenna, in which the electrical input provided to the antenna units is controlled according to a constant function. In **Fig. 9A** the tail is absent, and in **Fig. 9B** the tail is present;
- **Fig. 10A** and **Fig. 10B** illustrate simulation of the spatial distribution of the intensity of the radiation produced by the antenna, in which the electrical input provided to the antenna units is controlled according to a double Airy function. In **Fig. 10A** the tail is absent, and in **Fig. 10B** the tail is present;
- **Fig. 10C** illustrates a constraint that has to be fulfilled by two beams produced by the phased array antenna in the near field region;
- **Fig. 11A** illustrates a similar simulation as in **Fig. 10A**, but wherein a parameter of the function according to which the electrical input provided to the antenna units is controlled, has a different value;
- **Fig. 11B** illustrates a similar simulation as in **Fig. 10B**, but wherein a parameter of the function according to which the electrical input provided to the antenna units is controlled, has a different value;

- **Fig. 12** is a table which provides simulation results in the far field region for different functions which are used to control the electrical input provided to the antenna units of the antenna of **Fig. 8**;
- **Fig. 13** is a table which provides simulation results of the azimuth side lobe levels (in dBc) in the far field region, for the example of **Fig. 12**;
- **Fig. 14** illustrates an embodiment of a method of controlling a beam produced by an antenna; and
- **Fig. 15** illustrates an example of a telecommunication network with an obstacle and a source of interference, in which at least the curvature of the beam is controlled in the near field region.

## DETAILED DESCRIPTION

In the following detailed description, numerous specific details are set forth in order to provide a thorough understanding of the invention. However, it will be understood by those skilled in the art that the presently disclosed subject matter may be practiced without these specific details. In other instances, well-known methods have not been described in detail so as not to obscure the presently disclosed subject matter.

Unless specifically stated otherwise, as apparent from the following discussions, it is appreciated that throughout the specification discussions utilizing terms such as "providing", "selecting", "building", "simulating", "assigning" or the like, refer to the action(s) and/or process(es) of a processing unit that manipulate and/or transform data into other data, said data represented as physical, such as electronic, quantities and/or said data representing the physical objects.

The term "processing unit" should be broadly construed to include any kind of electronic device with data processing circuitry, such as a computer, a server, a chip, etc. It encompasses a single processor or multiple processors, which may be located in the same geographical zone or may, at least partially, be located in different zones and may be able to communicate together.

The term "non-transitory memory" as used herein should be expansively construed to cover any volatile or non-volatile computer memory suitable to the presently disclosed subject matter.

Embodiments of the presently disclosed subject matter are not described with reference to any particular programming language. It will be appreciated that a variety of programming languages may be used to implement the teachings of the presently disclosed subject matter as described herein.

In the present description, an antenna output, characterized by an antenna pattern, is at times referred to as an antenna beam. It should, however, be understood that for the purposes of the present invention, which describes, according to some embodiments, producing a non-linear radiation trajectory (i.e. having no linear axis of propagation direction), the term *antenna beam* can refer to a "near-field beam" being an *electromagnetic an-*

*tenna field* produced by an antenna device (formed by an array of antenna units) in the near field region of the antenna device. This electromagnetic antenna field has a general propagation direction from the antenna device and has the desired (predetermined) trajectory (curvature profile) defined by the maximal radiation intensity of the electromagnetic waves/field at each distance from the antenna in the near field region along said trajectory.

As will be described below, according to some embodiments, a plurality (generally, at least two) such near field beams are to be produced, each having the predetermined trajectory, such that the radiation goes around an obstacle. In this case, the antennas in the antenna array operate as two or more groups, each group producing a near field beam defined by a particular trajectory of the maximal radiation intensity of the electromagnetic waves at each distance (which is the "local" maximal radiation intensity at said distance and along said trajectory) in the near field region.

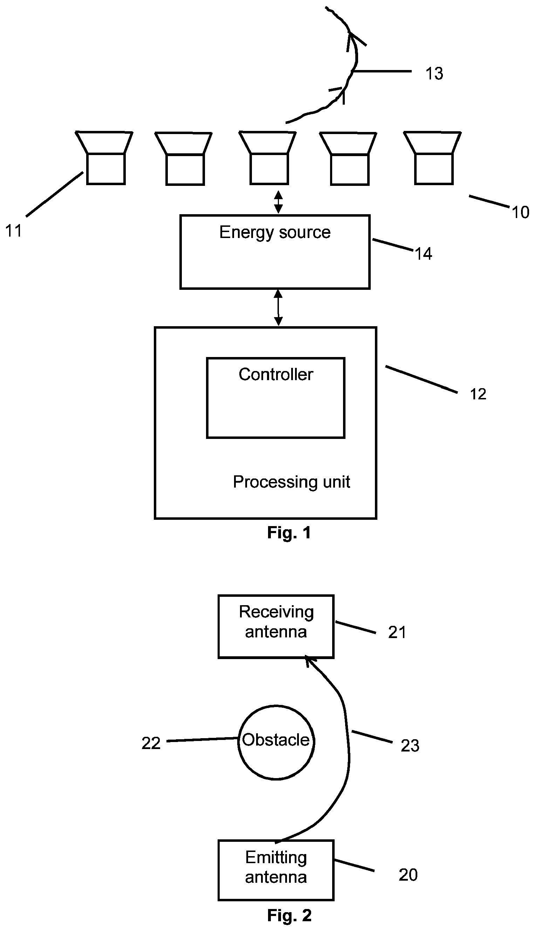

**Fig. 1** illustrates an embodiment of an antenna **10**. The antenna **10** can comprise a plurality of antenna units **11** (array of antenna units), which are configured to emit radiation (electromagnetic waves) based on an electrical input provided to them. Although in the present description it will be referred to "an antenna" or to "the antenna", it is to be understood that according to some embodiments a plurality of antennas, which can be located at different locations, can be used, wherein each antenna comprise a plurality of antenna units.

Each antenna unit **11** can comprise one or more elements which are able to produce an electromagnetic radiation based on an electrical input. The antenna units **11** can comprise for example dipoles.

The antenna units **11** can be located at the same location (e.g. within the same device) or at different locations.

The disposition of the antenna units **11** can be along a row, but other dispositions are possible. According to some embodiments, the antenna units **11** are located on a 2D surface.

The combination of all the radiations produced by the different antenna units **11** yields the near field beam **13** produced by the antenna **10**.

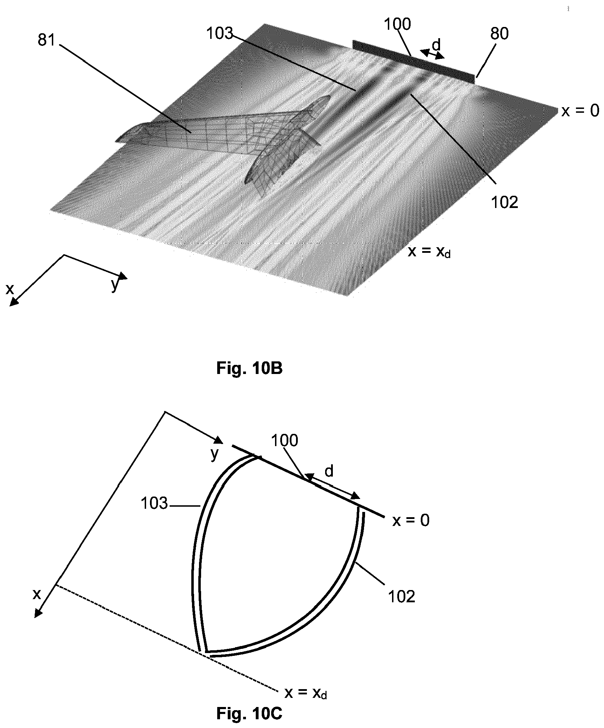

As explained later in the specification, in some embodiments, the antenna **10** is configured to produce more than one near field beam (see e.g. the example of **Figs. 10B** and **10C** in which two near field beams are produced. This number is however not limitative and more than two near field beams can be produced).

A controller **12**, which is operable on a processing unit, can control electrical input (such as amplitude, phase, etc. of the current and/or voltage) which is provided to the antenna units **11**. According to some embodiments, electrical input can be provided from an energy source **14** and the controller **12** can control said energy source. The energy source **14** can comprise for example an electrical generator, or can comprise multiple distinct electrical generators, each one communicating with one or more of the antenna unit(s) **11**.

Although the controller **12** and the energy source **14** are depicted as separate devices, in some embodiments they can be located in the same device. Similarly, the antenna units **11**, the controller **12** and the energy source **14** can be located in the same device.

As explained later in the specification, by controlling electrical input provided to the antenna units **11**, the antenna can produce at least one electromagnetic antenna field which has a curved trajectory in the near field region. In particular, according to some embodiments, a curved near field beam can be obtained.

A non-limitative example of an electromagnetic antenna field, such as a curved near field beam, is illustrated in **Fig. 1**.

**Fig. 2** illustrates an emitting antenna **20** (also called "TX" by a person skilled in the art), which can be an antenna as described with reference to **Fig. 1**. As mentioned above, the antennas can each comprise a plurality of antenna units which can be located at different locations.

In this example, it is desired to send electromagnetic waves from the emitting antenna **20** to a receiving antenna **21** (also called "RX" by a person skilled in the art). The receiving antenna **21** is located in the near field region of the emitting antenna **20**, for a given electromagnetic spectrum. For example, the electromagnetic spectrum can be the RF spectrum (generally defined as the range between 20 MHz and 20 GHz). The near field region is generally defined as the region within a distance below the value "$2D^2/\lambda$", wherein D is the size of the antenna aperture and $\lambda$ is the electromagnetic wavelength, whereas the far field region is generally defined as the region within a distance above the value "$2D^2/\lambda$".

As shown, an obstacle **22** is present between the emitting antenna **20** and the receiving antenna **21**, in particular on the direct path joining the emitting antenna **20** to the receiving antenna **21**. Thus, the emitting antenna **20** can be controlled to produce electromagnetic waves **23** with a curved trajectory, so as to get around and avoid the obstacle **22** and reach the receiving antenna **21**. Embodiments of methods of controlling the antenna units to produce a near field beam with a bent trajectory will be described later in the specification.

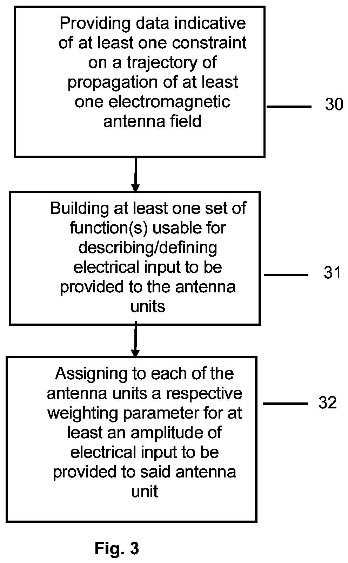

**Fig. 3** illustrates an embodiment of a method for use in signal transmission.

As shown, the method can comprise a step **30** of providing data indicative of at least one constraint on a predetermined trajectory of propagation of at least one electromagnetic antenna field to be generated by an array of antenna units.

According to some embodiments, the electromagnetic antenna field is to be emitted in the radio frequency range, but this is not limitative.

The data indicative of the at least one constraint can comprise data on at least a curvature of the trajectory in the near field region of the array of antenna units.

For example, the constraints can comprise e.g.

a desired curvature of the trajectory, or a desired trajectory as defined by a function, or a spatial area or a spatial path in which it is desired that the trajectory of the electromagnetic antenna field or beam remains located.

The constraints can be obtained by taking into account the physical environment in which the antenna units are located (or will be located), the constraints and requirements of the user, or other parameters.

According to some embodiments, additional constraints can be provided.

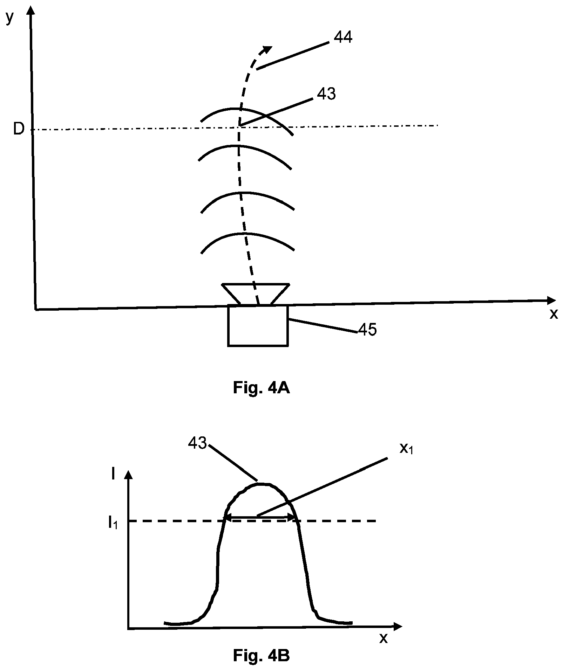

According to some embodiments, the additional constraints can comprise e.g. a constraint on the amplitude of the electromagnetic antenna field in the vicinity of the maximal amplitude of the electromagnetic antenna field emitted by the antenna units (which defines the trajectory of the beam as mentioned above) in the near field region. The distance which falls into the "vicinity" of the maximal amplitude can be defined e.g. by an operator, or predefined values can be stored in a non-transitory memory. An example of such a constraint is illustrated in **Fig. 4B.**

It is assumed for example that the antenna emits electromagnetic waves which propagate along an axis "y". **Fig. 4A** shows the beam **44** which is emitted by an antenna **45.**

**Fig. 4B** illustrates the distribution of the radiation intensity I along a given "slice" (that is to say along the axis "x" orthogonal to axis "y"), at a distance y = D from the antenna **45**. This distribution is purely illustrative and in practice different curves can be obtained.

As shown in **Figs. 4A** and **4B**, the maximal radiation amplitude at distance D from the antenna corresponds to peak **43**. At each distance from the antenna, it is possible to draw a function representing the spatial distribution of the radiation intensity, where the maximal amplitude corresponds to the position of the beam at this distance.

An example of a constraint that has to be fulfilled by the radiation emitted by the antenna can be that the amplitude of the radiation is less than a threshold "$I_1$" at a distance "$x_1/2$" from the maximal amplitude **43** (see **Fig. 4B**).

According to some embodiments, the constraints can comprise constraints on the spatial distribution of the radiation intensity, such as (but not limited to) the attenuation of the radiation intensity in given portions of the space, maximal or minimal radiation intensity in given portions of the space, etc.

The different constraints can be stored e.g. in a non-transitory memory (not represented) in communication with a processing unit.

Referring back to **Fig. 3**, the method can comprise a step **31** of building at least one set of at least one function usable for complying with said constraint.

This set of at least one function is usable for defining electrical input to be provided to said antenna units, which in turn define the electromagnetic antenna field.

In particular, this set of at least one function is usable for controlling the electrical input provided to each of the antenna units, in order in order to build an electromagnetic antenna field (in particular a near field beam) which complies with one or more of the constraints provided at step **30**.

This can include building a set of spatial transfer functions in a predetermined geometry (such as spherical coordinates, cylindrical coordinates, etc.).

Compliance with the constraints can be measured with a matching criterion. A matching criterion can for example indicate that the constraints have to be fully respected, or with an error less than a given threshold.

The method can comprise, based on data indicative of an arrangement of the antenna units in the array and said at least one set of at least one function, the step **31** of assigning to each of the antenna units a respective weighting parameter for at least an amplitude of electrical input to be provided to said antenna unit.

The data indicative of an arrangement of the antenna units can comprise data describing the number, the position and the orientation of the different antenna units.

According to some embodiments, the set of functions can also be used to determine the phase of the electrical input provided to each antenna unit. In this case, the set of at least one function can comprise a complex function.

In particular, the amplitude and the phase of the electrical current and/or the electrical voltage which has to be applied to the different antenna units can be set based on the set of at least one function.

As explained later in the specification, according to some embodiments, the power of the electrical input can be controlled (in this case, real functions can be used, and the phase of the electrical input is thus set equal to zero).

The building of the set of at least one function can be performed by at least a processing unit. If necessary, it can also comprise the intervention of an operator.

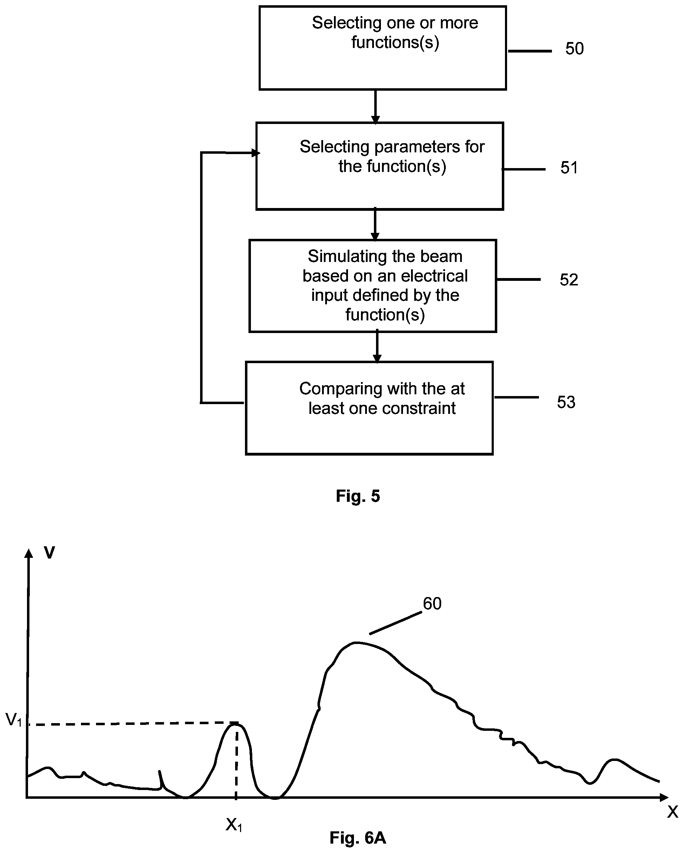

Referring to **Fig. 5**, the building of the function can comprise a step **50** of selecting one or more functions. These functions can include can include different categories of functions, and non-limitative examples are provided below.

Examples of categories of functions (which can also be called "spatial transfer functions") can include (but are not limited to) the family of Airy functions, the family of Half-Bessel functions, etc. Other examples include a combination of a plurality of Airy functions or Half-Bessel functions, a combination of functions wherein said combination includes at least one of an Airy function and an Half-Bessel function (for example an Airy function which is multiplied by at least another function, such as another Airy function, or a constant function, or any other adapted function). Other examples include one of the previous functions to which a mathematical operator has been applied (such as taking the absolute value of the function, or multiplying the function by its complex conjugate, etc.). The different categories of functions can be stored e.g. in a non-transitory memory.

The step of selecting the functions is however not mandatory and according to some embodiments, the type or category of function is predefined and stored in a non-transitory memory.

The selection of the function(s) can be performed according to some embodiments by a processing unit, based on the constraints provided at step **30**. This selection can be based on rules of selection which can be stored in the non-transitory memory.

For example, the processing unit can calculate the level of curvature that is required for the near field beam, based on the constraints provided at step **30**. A rule of selection can dictate that for a level of curvature below a predefined threshold, an Airy function should be chosen, whereas for a curvature above said predefined threshold, a Half-Bessel function should be chosen. Indeed, the Airy function generally provides a beam with a lower curvature than the Half-Bessel function.

Rules of selection can also be based on historical results (which can be obtained based on simulations and/or real tests). For example, for a given curvature, historical results have proven that a given type of function provides better performance than the other functions.

According to some embodiments, an operator can be asked to validate the choice proposed by the processing unit, such as e.g. through a user interface displayed on a screen. The method of **Fig. 5** can then comprise a step **51** of selecting parameters for the selected function(s). Indeed, the function can be expressed (this is however not limitative) as $A = F(X, P1, P2,...)$ wherein A is the amplitude, X is a coordinate along an axis, and P1, P2, etc. are the parameters (that is to say numerical values) which are to be defined. The function F can be a complex function or a real function. The function can depend from more than one coordinate, such as X, Y, or X, Y, Z, depending on the shape of the antenna (2D antenna, 3D antenna, etc.).

According to some embodiments, a plurality of near field beams need to be produced simultaneously by the antenna. If it is assumed, for example, that two near field beams need to be produced, a first function $F_1$ can be selected for controlling the first near field beam (with a first set of parameters to be selected), and a second function $F_2$ can be selected for controlling the second near field beam (with a second set of parameters to be selected). The final function F can be e.g. the sum of the first function $F_1$ and the second function $F_2$.

This can be applied to more than two near field beams.

The definition of the values of the parameters can be performed using different techniques.

According to some embodiments, predefined sets of values for the parameters are stored in a non-transitory memory, wherein each set of values is associated to a known trajectory of the near field beam. These data can be obtained e.g. by simulation and/or by real tests. The processing unit can compare the trajectory as required by the constraints of step **30** with different known trajectories stored in the non-transitory memory, in order to select the closest trajectory, and it can then select an associated set of values for the parameters.

According to other embodiments, a set of values is first defined for the parameters by an operator, following which the values of the parameters are improved by the processing unit by performing iterations, as explained below.

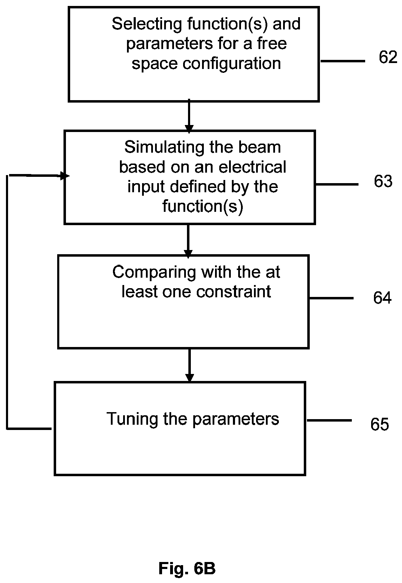

Another possible method for defining the parameters is described below with reference to **Fig. 6B**.

According to some embodiments, and as mentioned with reference to **Fig. 4B**, the constraints can comprise additional constraints on the intensity (or amplitude) of the radiation in the vicinity of the maximal radiation amplitude (which defines the trajectory of the beam), or in other portions of the space.

Tuning of the parameters of the function in order to fulfil the additional constraints can be performed by using the same steps as described with reference to step **51**. For example, predefined values of the parameters and corresponding radiation intensity distribution are stored in a non-transitory memory, and the processing unit selects parameters which can provide a near field beam which fulfils as much as possible the additional constraints.

If a plurality of constraints are provided, and for each constraint different values of the parameters are provided by the processing unit based on pre-stored values obtained from past simulations and/or real tests, the processing unit can perform an optimization process in order to select the set of parameters which can fulfil, simultaneously, in the best way, all the constraints.

The method of **Fig. 5** can then comprise a step **52** of simulating the near field beam that can be obtained by using the function calculated at the previous step for controlling at least the amplitude of the electrical input of the antenna.

This simulation can be performed using known *per se* simulation tools which can be run using a processing unit, such as, but not limited to, the software WIPL-D.

The method can then comprise a step **53** of comparing the properties of the simulated electromagnetic antenna field (trajectory, curvature, amplitude, distribution of the radiation intensity, etc.) with the at least one constraint.

For example, the simulated trajectory is compared with the trajectory as dictated by the constraints.

The comparison can be performed by a processing unit. If the comparison matches a matching criterion, the processing unit can output the function that was selected. The matching criterion can correspond to a configuration in which the differences between the simulated beam and the required beam (or at least some of them) are below a predefined threshold, or, alternatively, do not exist. According to some embodiments, a standard deviation error, or any other statistical value reflecting the error, is computed.

If the comparison does not match a matching criterion, the method can comprise an iterative sequence, in which the parameters (step **51**) are fine tuned. The beam is then simulated using these fined tune parameters (step **52**) and a new comparison is performed at step **53**.

According to some embodiments, the method is repeated until the constraints are fulfilled or comply with a matching criterion.

According to some embodiments, if the comparison performed at step 53 shows a discrepancy between the simulated beam and the required beam (as defined by the constraints) which is above a given threshold, the method can be iterative and return to step **50**.

**Fig. 6A** illustrates a non-limitative example of a function that was built. The graph illustrates the amplitude of the selected function with respect to the direction called "X". As shown, the function has a maximal amplitude **60**.

Each antenna unit can have a specific position in the "X" direction. For example, the antenna element with position $X_1$ will be provided with an electrical input of amplitude $V_1$ or with an electrical input which is weighted by a weighting parameter equal to $V_1$. In addition, the phase is equal to zero, since the function is a real function (see **Fig. 6A**).

If the function is a complex function, a complex number is associated to each antenna element. The magnitude of this complex number is associated with the electrical input (power) provided to the corresponding antenna element, and the phase of this complex number is associated with the phase shifting of the electrical input provided to the corresponding antenna element. For example, the magnitude of the complex number can define the power or the weighting of the power of the electrical input to be provided to the corresponding antenna element, and the phase of the complex number can define the phase shifting or the weighting of the phase shifting of the electrical input to be provided to the corresponding antenna element.

As mentioned above, the function can depend from more than one coordinate. For example, the function can depend on the coordinates X, Y or on the coordinates X, Y, Z. In this case, the position of the antenna element is considered in the corresponding X-Y referential, or X-Y-Z referential, so as to obtain the electrical input to be provided to each antenna element based on the function.

**Fig. 6B** illustrates another possible embodiment for selecting the function and the parameters of the function.

In this embodiment, it is supposed that at least an obstacle (such as an object whose presence can have consequences on the radiation pattern of the antenna) is present in the near field region of the antenna, in which it is desired to control the curvature of the near field beam. The configuration is which the obstacle is present is called the real space configuration. The configuration in which the obstacle is not present is called the free space configuration, and can also be simulated.

As already mentioned with respect to step **30** of **Fig. 3**, at least one constraint is provided on the trajectory of the near field beam.

This constraint is attempted to be fulfilled by the near field beam in the real space configuration.

The method of **Fig. 6B** can comprise a step **62** of selecting one or more function(s) and parameters for this function in order to fulfil the constraint in a free space configuration. The selection of the parameters requires less tuning in the free space configuration since the obstacle is not present. Simulation tools (such as Matlab™) can be used to calculate the appropriate parameters which provide the desired trajectory of the near field beam. According to some embodiments, and depending on the function and the constraints, analytical expressions of the parameters can be obtained.

The method can then comprise a step **63** of simulating the near field beam in the real space configuration (that is to say with the obstacle present in the near field region of the antenna), and to compare the results of the simulation with the constraint.

Since the obstacle is present in the real space configuration, it is likely that the comparison will indicate that the constraint is not fulfilled, or does not comply with a matching criterion. Indeed, the presence of the object can introduce perturbations in the spatial distribution of the radiation of the antenna.

The method can then comprise a step **65** of tuning the parameters in order to attempt to fulfil the constraint in the real space configuration.

This tuning can be performed by a processing unit which can for example test several possible values around the values set at step **62**, until the constraint is fulfilled by the simulated beam in the real space configuration.

According to some embodiments, the input of an operator can be taken into account in order to tune the parameters.

According to some embodiments, results of past simulations and/or of real tests concerning the effect of the parameters on the trajectory of the near field beam (or on other properties of the near field beam) can be used by the processing unit in order to select the correct values for the parameters.

It is to be noted that the function and the parameters which were obtained following the implementation of the different methods described above can be valid for a given antenna, but not necessarily for another.

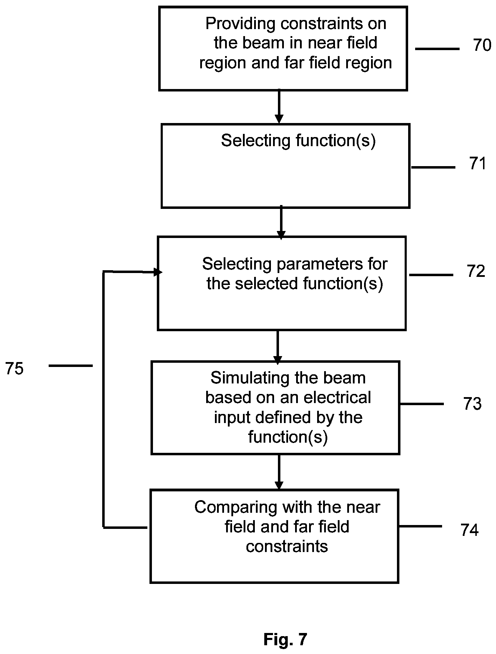

**Fig. 7** illustrates a method in which it is desired to control at least the curvature of the beam in the near field region, as well as to control at least one property of the beam in the far field region. The properties in the far field region can include e.g. at least one of:

- the peak value of the beam (which can be defined e.g. as the maximal power of the main beam in the far field region);

- the main gain of the beam (which can be defined e.g. as the ratio between the peak value and the power distributed by an omnidirectional antenna);
- the beam width (in the far field region), and
- the amplitude of at least one side lobe of the beam in the far field region.

The method can comprise a step **70** of providing data indicative of at least one constraint on the beam in the near field and far field region. The constraints in the near field region can include e.g. constraints on the curvature of the beam, as explained with reference to step **30** in **Fig. 3**, or other additional constraints, as already described above.

The method can then comprise a step **71** of selecting one or more function(s). This step is similar to step **50**. This is however not mandatory and according to some embodiments, the type of function is predefined and stored in a non-transitory memory.

According to some embodiments, a real function (and not a complex function) can be chosen (in this case the phase is set equal to zero for the electrical input provided to the antenna units).

Choosing a real function ensures that a beam will be obtained in the far field region.

For example, the absolute value of an Airy function can be chosen as the real time function. This example is however not limitative.

The method can then comprise a step **72** of selecting parameters for the selected function(s). This step is similar to step **51** above. The parameters of the function are chosen in order to attempt to comply with the near field (and also the far field) constraints.

The method can then comprise a step **72** of simulating the beam that can be obtained by using the function with the parameters calculated at the previous step for controlling at least the amplitude of the electrical input provided to the antenna units of the antenna.

This step is similar to step **52** above.

The method can then comprise a step **73** of comparing the properties of the simulated beam (trajectory, curvature, amplitude, distribution of the amplitude, etc.) with the constraints in the near field region.

In the far field region, at least one of the gain of the beam, the peak value, the beam width and the amplitude of at least one side lobe of the beam can be calculated during the simulation and compared to the constraints.

If the comparison does not match a matching criterion, the method can comprise an iterative sequence (step **75**), in which the parameters are fine tuned.

Since in the embodiment of **Fig. 7**, constraints are provided both in the near field region and in the far field region, according to some embodiments, the parameters are first selected in order to fulfil with the constraints in the near field region.

In other words, the constraints in the far field region are first disregarded, and the parameters are mainly selected based on the constraints in the near field region (in this case, a method similar to the method of **Fig. 5** can be performed).

Then, the parameters can be fine-tuned in order to fulfil also the constraints in the far field region.

Indeed, if for example an obstacle is present in the near field region, the parameters can be chosen so as to obtain a trajectory of the near field beam which allows avoiding the obstacle. Once the near field beam is able to bypass the obstacle, it is easier to fine tune the parameters in order to fulfil the far field constraints, since the near field beam behaves as if no obstacle was present.

The tuning of the parameters in order to fulfil with the far field constraints can rely on various techniques.

According to some embodiments, predefined sets of values for the parameters are stored in a non-transitory memory, wherein each set of values is associated to a known properties of the beam in the far field region. These data can be obtained e.g. by simulations and/or by real tests.

The processing unit can compare the properties as required by the constraints in the far field region with the properties stored in the non-transitory memory, in order to select the most adapted set of values for the parameters.

According to other embodiments, the values of the parameters are tuned by the processing unit by testing several possible values (the starting point of the tuning can correspond to the parameters calculated to fulfil the near field constraints) until the constraints in the far field region are also fulfilled.

The tuning of the parameters in order to comply with the far field constraints can be performed in a range of values that does not jeopardize the properties of the beam in the near field value. The method can for example comprise comparing at each iteration the simulated beam with the far field constraints, and also with the near field constraints to check that these constraints are still met.

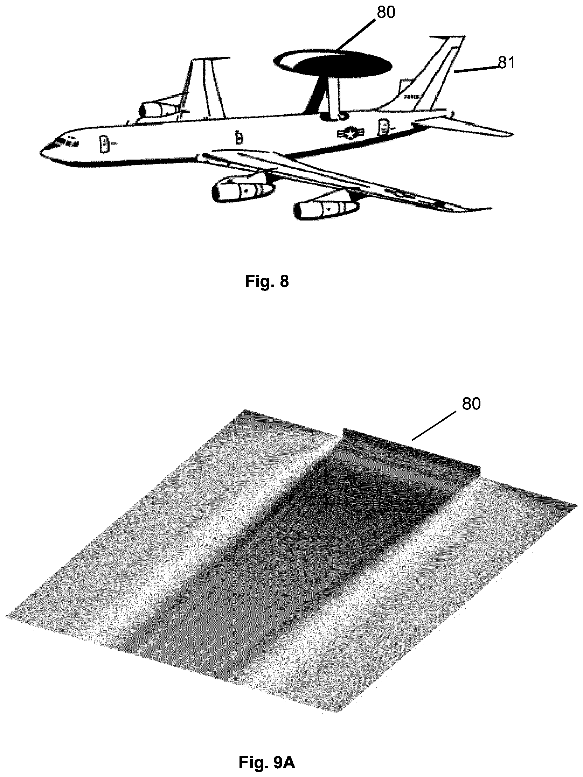

Attention is now drawn to **Fig. 8**, which provides a non-limitative example of an antenna **80** whose antenna pattern is to be controlled.

As shown, the antenna **80** is mounted on an airborne vehicle. It is desired to control the antenna pattern particularly in the backwards direction. The tail **81** of the airborne vehicle can disturb (or: be an obstacle to) the antenna pattern. The curvature of the beam should thus be controlled to "bypass" the tail **81**.

In this non-limitative example, the antenna **80** is a rectangular antenna of 8 m by 1 m for which the far field boundary is approximately 1.5 km. The distance between the antenna **80** and the tail **81** is approximately 7 m.

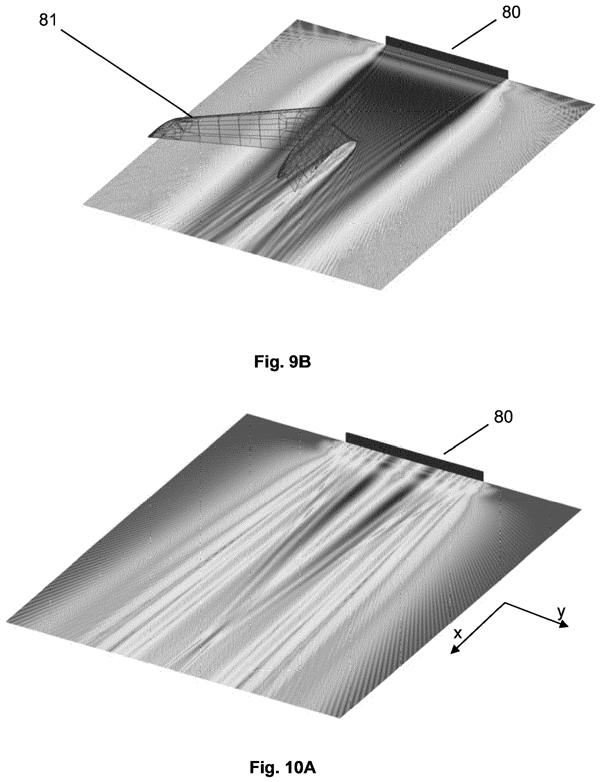

**Fig. 9A** and **Fig. 9B** illustrate a simulation of the intensity (in dB) of the radiation emitted by the antenna, in which the electrical input provided to the antenna units is controlled according to a constant function. In this case, all antenna units thus receive the same electrical input (since the weighting parameters are the same for each antenna unit). In the simulation of **Fig. 9A**, the tail is absent, and in the simulation of **Fig. 9B** the tail is present in compliance with the scenario illustrated in **Fig. 8**.

As can be seen in **Fig. 9B**, the presence of the tail clearly impinges on the intensity of the beam in the vicinity of the tail, and in particular behind the tail.

**Fig. 10A** and **Fig. 10B** illustrate a simulation of the intensity of the radiation emitted by the antenna, in which the electrical input provided to the antenna units is controlled according to a double Airy function. A double Airy function corresponds to the multiplication of an Airy function with its complex conjugate. A double Airy function is thus a real function.

In the example of **Figs. 10B** and **10C,** two beams are emitted by the phased array antenna in the near field region (a first beam **102** and a second beam **103**, which join after bypassing the tail **81** into a single beam).

At the position x=0 (see **Figs. 10B** and **10C),** each beam **102, 103** is shifted by a distance "d" along axis "y", from either side of the centre **100** of the antenna. As illustrated (see e.g. **Fig. 10C),** it is desired that at position x=$x_d$, the first beam **102** collides with the second beam **103**. This requirement will henceforth be referred to as the "constraint".

In the specific example of **Figs. 10B** and **10C**, a double Airy function which produces a parabolic curvature is chosen to control the antenna units.

One parameter of an Airy function is the parameter called $\kappa$ (for instance simulation tools such as "Matlab™" use this parameter as an input parameter for building an Airy function).

In the particular embodiment of **Fig. 10B** and **Fig. 10C** (that is to say with the above mentioned constraint, and the choice of a parabolic curvature), it can be mathematically proven that an analytic expression of $\kappa$ can be calculated in order to fulfil the constraint. This analytic expression is provided below:

$$\kappa = \sqrt[3]{\frac{d}{x_d^2}\left(\frac{2\pi}{\lambda}\right)^2}$$

**Fig. 10B** simulates a case wherein d = 0.7 m. The simulation provides $\kappa.\lambda$ = 0.19

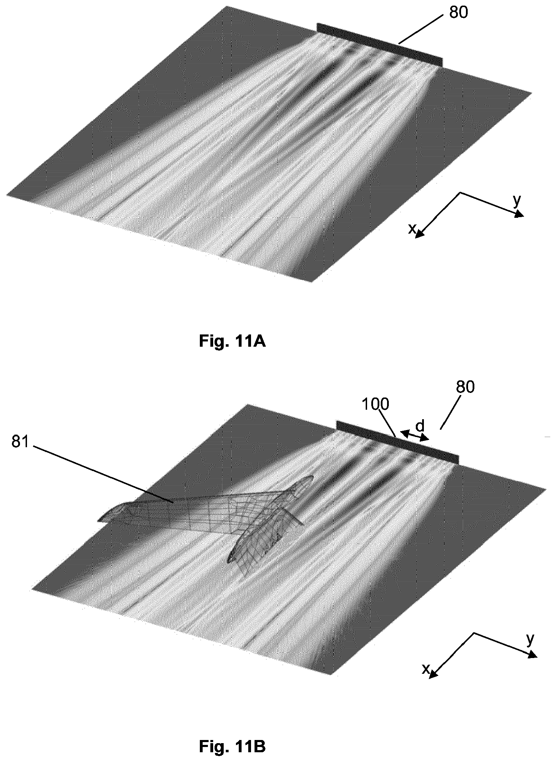

**Fig. 11A** illustrates a similar simulation as in **Fig. 10A**, but, in **Fig. 11A**, d is set equal to 0.9 m. **Fig. 11B** illustrates a similar simulation as in **Fig. 10B**, but, in **Fig. 11B**, d is set equal to 0.9 m.

An appropriate choice of the value d, and thus of the parameter $\kappa$ in the Airy function allows obtaining a parabolic beam which circumvents the tail, and thus ensures an improvement of the antenna pattern with respect to the radiation obtained by providing a constant input to the antenna units.

Although in the specific example of **Figs. 10A** to **10C** and **Figs. 11A** to **11B**, an analytic expression of at least one parameter of the Airy function can be used, it is to be noted that in other embodiments the parameters of the function which is chosen to control the electric input provided to the antenna units, do not necessarily have an analytic expression. In this case, the parameters can be numerically determined by tests, simulations, sequential tests, and/or using additional input from the user.

In some embodiments, it can be desired to control also the far field behaviour of the beam. In the same example as provided above (antenna of an airborne), properties such as peak value, beam width and three first side lobes level can be controlled. This list is however not limitative.

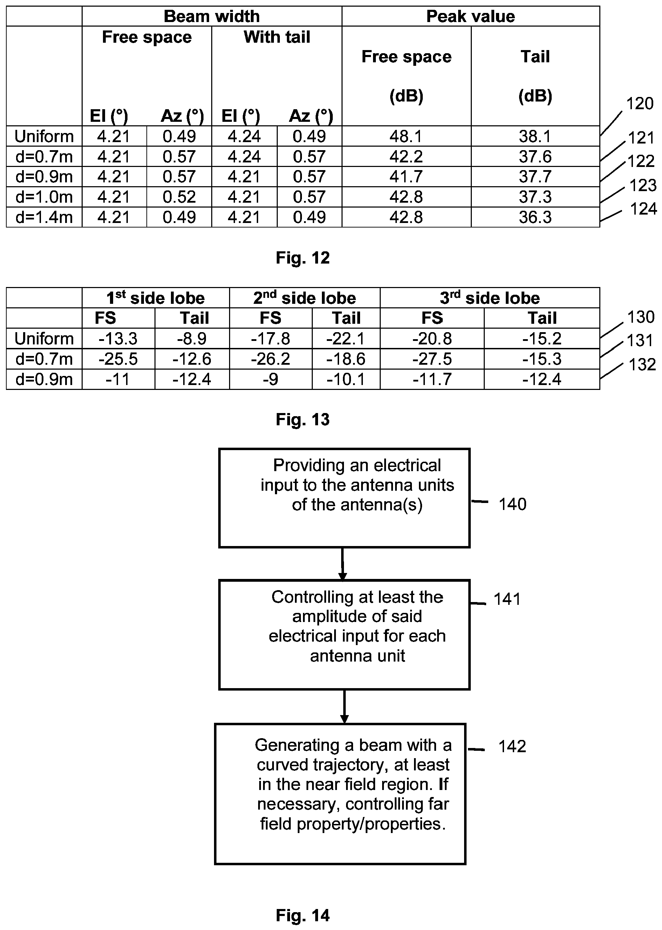

**Fig. 12** is a table which provides simulation results in the far field region for different functions which are used to control the electrical input provided to the antenna units of the antenna **81** of **Fig. 8**:

- At line **120** of the table, a constant function is used. The beam width is provided in elevation and azimuth, for a free space configuration (without the tail) and with the tail. The peak value (in dB) of the beam is also provided in free space and with the tail.
- At line **121** of the table, a double Airy function is used (with d = 0.7 m). This function is similar to the one used in **Fig. 10A** and **Fig. 10B**.
- At line **122** of the table, a double Airy function is used (with d = 0.9 m). This function is similar to the one used in **Fig. 11A** and **Fig. 11B**.
- At line **123** of the table, a double Airy function is used (with d = 1.0 m).
- At line **124** of the table, a double Airy function is used (with d = 1.4 m).

**Fig. 13** is a table which provides simulation results of the azimuth side lobe levels (in dBc) in the far field region (in this table the expression "FS" means that the simulation is made in "free space" without the tail, and the expression "Tail" means that the simulation is made with the tail) for different functions which are used to control the electrical input provided to the antenna units of the antenna **81** of **Fig. 8**:

- At line **130** of the table, a constant function is used.
- At line **131** of the table, a double Airy function is used (with d = 0.7 m). This function is similar to the one used in **Fig. 10A** and **Fig. 10B**.
- At line **132** of the table, a double Airy function is used (with d = 0.9 m). This function is similar to the one used in **Fig. 11A** and **Fig. 11B**.

The far field performances in terms of peak value are quite similar for the different functions. The Airy beam side lobe levels for small angles are slightly higher than the side lobe levels of the uniform function, while for large angles, the Airy beam side lobe levels are much lower than the side lobe levels of the uniform function. For large angles, the Airy beam side lobe levels are the lowest.

If, for example, the most important criterion for the operator is to lower the amplitude of the first side lobe, then d=0.7 m should be chosen (see **Fig. 13**). This example is however not limitative.

Referring now to **Fig. 14**, a method of controlling a beam produced by an antenna or a plurality of antennas is described. The antenna can be as described e.g. with reference to **Fig. 1**, and can thus comprise a plurality of antenna units.

The method can comprise a step **140** of providing an electrical input to the antenna units of the antenna. This electrical input can be produced by an energy source, such as a generator. According to some embodiments, the antenna produces a beam in the radiofrequency range.

The method can comprise a step **141** of controlling at least the amplitude (and if necessary also the phase) of the electrical input provided to the antenna units of the antenna.

In particular, this step **141** can comprise controlling at least the amplitude of electrical input provided to each of the antenna units according to respective weighting parameters associated to each of the antenna units. The weighting parameters can be computed according to at least a set of at least one function (this set of function(s) may have been built in the past, e.g. during previous simulations, as explained in the various embodiments above, see e.g. **Figs. 3** to **7**). For example, the applied voltage is controlled according to the function(s).

Step **141** can be performed by the controller **12** shown in **Fig. 1**. As shown in **Fig. 6A**, each antenna unit receives an amplitude and a phase of the electrical input which depends on its position, in accordance with the weighting parameters that were computed based on a function (for example, in **Fig. 6A**, antenna unit with position $X_1$ receives an electrical input of amplitude $V_1$, or with an amplitude weighted by weighting parameter $V_1$). In the example of **Fig. 6A**, the function is a real function, thus the phase is equal to zero.

The electrical input which is defined based on the weighting parameters influence at least the curvature of the trajectory of the beam produced by the antenna.

As a consequence, the antenna produces a beam which has a curved trajectory in the near field region (step **92**).

According to some embodiments, the phase of the electrical input is controlled by the controller. This can be performed e.g. by using a function which has a complex expression. The phase of the electrical input provided to each antenna unit is computed based on the complex value of the function at each position.

According to some embodiments, the power of the electrical input is controlled by the controller according to the function. This can be performed e.g. by using a function which has a real expression.

According to some embodiments, the function can be chosen so as to control properties of the beam also in the far field region (see e.g. **Fig. 7** which provides an embodiment of a method for creating such a function). Examples of far field properties include e.g. at least one of a constraint on the main gain of the beam in the far field region, a constraint on the beam width in the far field region, a constraint on the amplitude of the side lobes of the beam in the far field region, and a constraint on a peak value of the beam in the far field region.

According to some embodiments, the intensity of the current provided to the antenna units is controlled by the controller according to the function.

As already mentioned, the function can be built so that the produced beam fulfils predefined constraint(s).

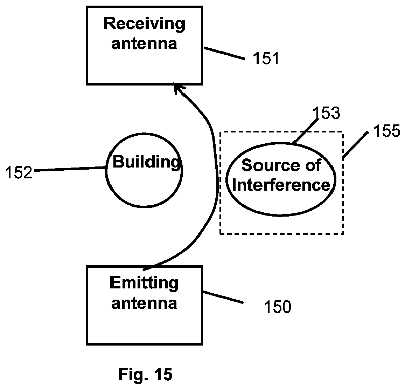

A non-limitative example, in which the curvature of the trajectory of a near field beam is controlled, is provided with reference to **Fig. 15**. In a telecommunications network, it can be necessary to emit a beam from an emitting antenna **150** towards a receiving antenna **151**. In this example, there is an obstacle (building **152**), which is why it is necessary to produce a curved beam. In addition, a source of interference **153** is present (such as an antenna of another telecommunications network).

A set of function(s) can be built so as to ensure that the near field beam has a curved trajectory which fits with the physical configuration of **Fig. 15**, and in addition, which has an amplitude in the spatial region **155** which is located on the side of the beam which is below a threshold to avoid the creation of undesired electromagnetic waves due to the source of interference **153**. The threshold can be defined by an operator and provided in the constraints mentioned at step **30** of **Fig. 3**.

According to some embodiments, it is desired to obtain interferences with the source of interference.

For example, it is desired to create interferences with the source of interference **153**.

In this case, the function is chosen so that the amplitude of the radiation in the spatial region **155** which is located on the side of the beam is above a given threshold, so as to create the required interferences.

When the beam comes across the source of interference **153**, since the amplitude of the radiation in the lateral region **155** is above a threshold, interferences are created with the source of interference **153**.

The invention contemplates a computer program being readable by a computer for executing one or more methods of the invention. The invention further contemplates a machine-readable memory tangibly embodying a program of instructions executable by the machine for executing one or more methods of the invention.

It is to be noted that the various features described in the various embodiments may be combined according to all possible technical combinations.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

Those skilled in the art will readily appreciate that various modifications and changes can be applied to the embodiments of the invention as hereinbefore described without departing from its scope, defined in and by the appended claims.

**Claims**

1. A method for use in signal transmission, the method comprising:

    - providing data indicative of at least one constraint on a predetermined trajectory of propagation of at least one electromagnetic antenna field to be generated by an array of antenna units, said data indicative of the at least one constraint comprising data on at least a curvature of said trajectory in the near field region of the array of antenna units,
    - building, using a processing unit, at least one set of at least one function usable for defining electrical input to be provided to said antenna units for complying with said constraint, and
    - based on data indicative of an arrangement of the antenna units in the array and said at least one set of at least one function, assigning to each of the antenna units a respective weighting parameter for at least an amplitude of electrical input to be provided to said antenna unit, such that a resulting electromagnetic antenna field of the array of antenna units complies with said constraint on said predetermined trajectory of propagation according to a matching criterion.

2. The method of claim 1, wherein the set of at least one function includes one of:

    - an Airy function,
    - a Half-Bessel function,
    - a combination of a plurality of Airy functions or Half-Bessel functions, and
    - a combination of functions wherein said combination includes at least one of an Airy function and a Half-Bessel function.

3. The method of any one of claims 1 or 2, comprising performing repetitively:

    (a) building, using a processing unit, at least one set of at least one function usable for defining an electrical input to be provided to said antenna units, and
    (b) simulating the trajectory of the resulting electromagnetic antenna field of the array of antenna units obtained based on an electrical input to be provided to each of the antenna units according to weighting parameters determined based on data indicative of an arrangement of the antenna units in the array and said at least one set of at least one function,

wherein (a) and (b) are repeated until said at least one constraint is fulfilled by the simulated resulting electromagnetic antenna field according to a matching criterion.

4. The method of any one of claims 1 to 3, wherein the at least one constraint comprises at least one of:

    - a constraint on at least a property of the electromagnetic antenna field in the far field region;
    - a constraint on the amplitude of the electromagnetic antenna field in the near field region,
    - a constraint on the main gain of the electromagnetic antenna field in the far field region,
    - a constraint on a beam width of the electromagnetic antenna field in the far field region,
    - a constraint on an amplitude of at least one side lobe of the electromagnetic antenna field in the far field region, and
    - a constraint on a peak value of the electromagnetic antenna field in the far field region.

5. The method of any one of claims 1 to 4, wherein the constraint comprises a constraint on a predetermined trajectory of propagation of at least one electromagnetic antenna field to be generated by an array of antenna units in a space comprising at least one obstacle, the method comprising:

    - building, using a processing unit, at least one set of at least one function usable for defining electrical input to be provided to said antenna units for complying with said constraint in said space but without said obstacle,
    - simulating, in said space comprising said obstacle, the trajectory of the resulting electromagnetic antenna field of the array of antenna units obtained based on an electrical input to be provided to each of the antenna units according to respective weighting parameters determined based on data indicative of an arrangement of the antenna units in the array and said at least one set of at least one function, and

- tuning the set of at least one function until the constraint is fulfilled by the simulated resulting electromagnetic antenna field in said space comprising said obstacle, according to a matching criterion.

6. A method of controlling an electromagnetic antenna field generated by an array of antenna units, the method comprising:

- controlling at least the amplitude of electrical input provided to each of the antenna units, and
- generating at least one electromagnetic antenna field by the antenna units, wherein the trajectory of the electromagnetic antenna field is curved in the near field region, as a consequence of at least said control.

7. The method of claim 6, comprising controlling at least the amplitude of electrical input provided to each of the antenna units according to respective weighting parameters associated to each of the antenna units, wherein the respective weighting parameters associated to each of the antenna units are calculated based on at least one set of at least one function and based on data indicative of an arrangement of the antenna units in the array.

8. The method of any one of claims 6 or 7, wherein an obstacle is present in the near field region of the array of antenna units, the method comprising generating at least one electromagnetic antenna field by the array of antenna units, wherein the trajectory of the electromagnetic antenna field is curved in the near field region so as to make the electromagnetic antenna field avoid said object.

9. The method of any one of claims 6 to 8, comprising controlling the phase of the electrical input so as to make it equal to zero.

10. The method of any one of claims 6 to 9, comprising controlling at least one property of the electromagnetic antenna field in the far field region, said at least one property including at least one of:

- a constraint on the main gain of the electromagnetic antenna field in the far field region,
- a constraint on a beam width of the electromagnetic antenna field in the far field region,
- a constraint on an amplitude of at least one side lobe of the electromagnetic antenna field in the far field region, and
- a constraint on a peak value of the electromagnetic antenna field in the far field region.

11. The method of any one of claims 6 to 10, comprising:

- generating at least one beam in the near field region, or
- generating a beam in the near field region and controlling an amplitude of the electromagnetic antenna field in the vicinity of the beam in the near field region

12. The method of claim 11, comprising at least one of:

- the amplitude of the radiation in the vicinity of the beam is controlled to be less than a desired threshold, in order to avoid interferences with an element present in the near field region of the array of antenna units; and
- the amplitude of the radiation in the vicinity of the beam is controlled to be above a desired threshold, in order to create interferences with an element present in the near field region of the array of antenna units.

13. The method of any one of claims 6 to 12, comprising:

- providing data indicative of at least one constraint on a predetermined trajectory of propagation of at least one electromagnetic antenna field to be generated by the array of antenna units, said data indicative of the at least one constraint comprising data on at least a curvature of said trajectory in the near field region of the array of antenna units,
- building, using a processing unit, at least one set of at least one function usable for defining electrical input to be provided to said antenna units for complying with said constraint,
- based on data indicative of an arrangement of the antenna units in the array and said at least one set of at least one function, assigning to each of the antenna units a respective weighting parameter for at least an amplitude of electrical input to be provided to said antenna unit, and
- generating an electromagnetic antenna field by the array of antenna units such that the electromagnetic antenna field complies with said constraint according to a matching criterion.

14. A system, comprising:

- an array of antenna units, and
- a controller configured to control at least the amplitude of electrical input provided to each of the antenna units, said control being performed so as to generate at least one electromagnetic antenna field by the antenna units, such that the trajectory of the electromagnetic antenna field is curved in the near field region, as a consequence of at least said control.

15. The system of claim 14, wherein the controller is configured to control the electromagnetic antenna field generated by the array of antenna units according to the method of any of claims 6 to 13.

**Fig. 1**

**Fig. 2**

Providing data indicative
of at least one constraint
on a trajectory of
propagation of at least
one electromagnetic
antenna field —— 30

Building at least one set of
function(s) usable for
describing/defining
electrical input to be
provided to the antenna
units —— 31

Assigning to each of the
antenna units a respective
weighting parameter for at
least an amplitude of
electrical input to be
provided to said antenna
unit —— 32

**Fig. 3**

EP 3 410 611 A1

**Fig. 4A**

**Fig. 4B**

```
┌─────────────────────────┐
│   Selecting one or more │——— 50
│      functions(s)       │
└─────────────────────────┘
             │
             ▼
┌─────────────────────────┐
│  Selecting parameters for │——— 51
│      the function(s)    │
└─────────────────────────┘
             │
             ▼
┌─────────────────────────┐
│    Simulating the beam  │
│  based on an electrical │——— 52
│    input defined by the │
│       function(s)       │
└─────────────────────────┘
             │
             ▼
┌─────────────────────────┐
│    Comparing with the at │——— 53
│    least one constraint │
└─────────────────────────┘
```

Fig. 5

Fig. 6A

```
┌─────────────────────────┐
│  Selecting function(s) and │
│    parameters for a free   │──── 62
│     space configuration    │
└─────────────────────────┘
              │
              ▼
┌─────────────────────────┐
│    Simulating the beam     │
│   based on an electrical   │
│    input defined by the    │──── 63
│         function(s)        │
└─────────────────────────┘
              │
              ▼
┌─────────────────────────┐
│   Comparing with the at    │
│    least one constraint    │──── 64
└─────────────────────────┘
              │
              ▼
┌─────────────────────────┐
│    Tuning the parameters   │──── 65
└─────────────────────────┘
```

**Fig. 6B**

Providing constraints on
the beam in near field
region and far field region ——— 70

Selecting function(s) ——— 71

Selecting parameters for
the selected function(s) ——— 72

75 ———

Simulating the beam
based on an electrical
input defined by the
function(s) ——— 73

Comparing with the near
field and far field
constraints ——— 74

Fig. 7

**Fig. 8**

**Fig. 9A**

**Fig. 9B**

**Fig. 10A**

**Fig. 10B**

**Fig. 10C**

Fig. 11A

Fig. 11B

| | Beam width | | | | Peak value | | |
| --- | --- | --- | --- | --- | --- | --- | --- |
| | Free space | | With tail | | Free space (dB) | Tail (dB) | |
| | El (°) | Az (°) | El (°) | Az (°) | | | |
| Uniform | 4.21 | 0.49 | 4.24 | 0.49 | 48.1 | 38.1 | 120 |
| d=0.7m | 4.21 | 0.57 | 4.24 | 0.57 | 42.2 | 37.6 | 121 |
| d=0.9m | 4.21 | 0.57 | 4.21 | 0.57 | 41.7 | 37.7 | 122 |
| d=1.0m | 4.21 | 0.52 | 4.21 | 0.57 | 42.8 | 37.3 | 123 |
| d=1.4m | 4.21 | 0.49 | 4.21 | 0.49 | 42.8 | 36.3 | 124 |

**Fig. 12**

| | 1st side lobe | | 2nd side lobe | | 3rd side lobe | | |
| --- | --- | --- | --- | --- | --- | --- | --- |
| | FS | Tail | FS | Tail | FS | Tail | |
| Uniform | -13.3 | -8.9 | -17.8 | -22.1 | -20.8 | -15.2 | 130 |
| d=0.7m | -25.5 | -12.6 | -26.2 | -18.6 | -27.5 | -15.3 | 131 |
| d=0.9m | -11 | -12.4 | -9 | -10.1 | -11.7 | -12.4 | 132 |

**Fig. 13**

Providing an electrical input to the antenna units of the antenna(s) — 140

Controlling at least the amplitude of said electrical input for each antenna unit — 141

Generating a beam with a curved trajectory, at least in the near field region. If necessary, controlling far field property/properties. — 142

**Fig. 14**

**Receiving antenna** — 151

152 — **Building**

153

155

**Source of Interference**

**Emitting antenna** — 150

**Fig. 15**

Europäisches
Patentamt

European
Patent Office

Office européen
des brevets

**EUROPEAN SEARCH REPORT**

Application Number

EP 18 17 4430

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 151 828 B2 (SHIPLEY CHARLES A [US]; TECHNOLOGY SERVICE CORP [US]) 6 October 2015 (2015-10-06) * column 3, line 16 - line 67 * * column 9, line 4 - line 40 * * figure 11 * ----- | 1-15 | INV. H04B7/0413 H01Q23/00 H01Q3/00 |

TECHNICAL FIELDS
SEARCHED     (IPC)

H04B
H01Q
G01S

The present search report has been drawn up for all claims

| Place of search | Date of completion of the search | Examiner |
|---|---|---|
| Munich | 22 October 2018 | Lutz, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 17 4430

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2018

| Patent document cited in search report | | Publication date | Patent family member(s) | | Publication date |
|---|---|---|---|---|---|
| US 9151828 | B2 | 06-10-2015 | US | 2013002474 A1 | 03-01-2013 |
| | | | US | 2015369905 A1 | 24-12-2015 |
| | | | WO | 2013058842 A1 | 25-04-2013 |

EPO FORM P0459

For more details about this annex : see Official Journal of the European Patent Office, No. 12/82